# EUROPEAN PATENT APPLICATION

(11) **EP 1 845 717 A2**
(43) Date of publication of application: **17.10.2007**
(21) Application number: 06017924.9
(22) Date of filing: 28.08.2006
(51) Int. Cl.: H04N 5/445

(54) **Video program processing method and system**

(30) Priority: 13.04.2006 US 279747
(71) Applicant: CyberLink Corp., Hsin-Tien City, Taipei Hsien (TW)
(72) Inventor: Huang, Chen-Hsiu, Chi-Lung (TW); Huang, Ho-Chao, Shindian City Tapei (TW); Chen, Ming-Jun, Tai-Nan City (TW)
(74) Representative: Schaeberle, Steffen

(57) **Abstract**

A method for video program processing includes searching for a static image (120, 220) in a video segment, a static image (120, 220) comprising an image in the video segment that does not significantly change over a predetermined time of the video segment. Upon finding a static image (120, 220), an indication is given to an image processor (630) that the video segment is a program segment.

## Description

The present invention relates to a method for video program processing, a video program processing system, and a computer-readable medium according to the pre-characterizing clauses of claims 1, 9, and 16.

Recording television programs is a popular activity for both end viewers and media companies. An end viewer may wish to record a program for the convenience of later viewing. A media company, such as an Internet Web site or a re-broadcaster, may wish to record a program to play highlights to its own viewers.

One difficulty faced by those who record TV programs is the presence of advertising spots (commercials). End viewers may wish to delete or skip commercials, since these tend to waste valuable storage space and viewing time. A company may wish to remove or skip commercials in a recording so as to save time during post processing, which can be time consuming as it is. This difficulty is also faced when not recording the TV program and instead watching it in real-time. Furthermore, users may want to watch highlights instead of the whole program to save time. This increases the need for both an end viewer and a media company to distinguish program segments from non-program segments.

One conventional commercial detection scheme detects an increase in sound volume that broadcasters sometimes apply to commercials. Other schemes exist as well. However, the prior art schemes are far from optimal and prone to detection errors, and specifically so with respect to sports programs.

This in mind, the present invention aims at providing a method for video program processing, a video program processing system, and a computer-readable medium that offer improved detection.

This is achieved by a method for video program processing, a video program processing system, and a computer-readable medium according to claims 1, 9, and 16.

The dependent claims pertain to corresponding further developments and improvements.

As will be seen more clearly from the detailed description following below, the claimed method for video program processing includes searching for a static image in a video segment, a static image comprising an image in the video segment that does not significantly change over a predetermined time of the video segment; and upon finding a static image, indicating to an image processor that the video segment is a program segment. The claimed video program processing system and computer-readable medium include similar improvements

In the following, the invention is further illustrated by way of example, taking reference to the accompanying drawings. Thereof
Fig. 1 shows a video display device showing a sports program with a static image,
Fig. 2 shows the video display device showing another sports program with another static image,
Fig. 3 shows a flowchart of a method for video program processing using static images according to the present invention,
Fig. 4 illustrates a video program processing system according to the present invention,
Fig. 5 illustrates another video program processing system according to the present invention, and
Fig. 6 shows a block diagram of a video program processing system according to the present invention.

The present invention aims to identify program and non-program segments in a video program. The present invention applies to both video programs as broadcast and recordings of such programs. The term broadcast is used to cover traditional television, cable, or satellite broadcasts as well as newer computer network broadcasts (such as a LAN-based training video). A program segment is a part of the broadcast or recording that a viewer desires to watch, such as part of a sports game or movie, while a non-program segment is a part of the program that a user wishes to skip, delete, or identify for further action, such as an advertisement. In sports programs a program segment can be called a game segment and a non-program segment can be called a non-game segment. The present invention identifies program and non-program segments by way of detecting static images, static images usually being present only in program segments.

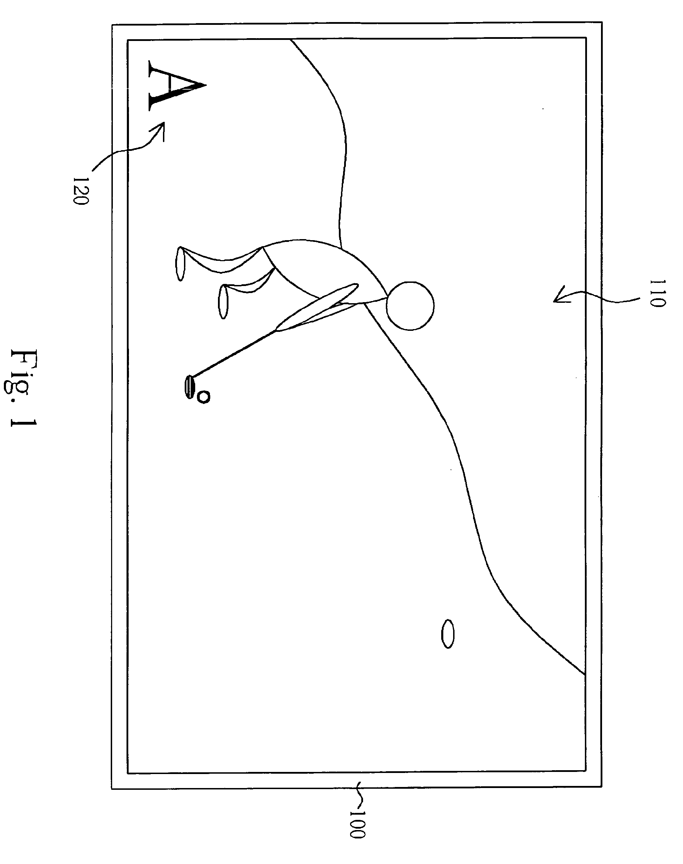

Fig. 1 shows a video display device 100 (i.e., a TV or computer monitor) showing a video program 110, which is a sports program in this example. Besides the sports program 110 itself, which in this case is a golf game, a channel logo 120 is also displayed on the display device 100. The channel logo 120 is a static image, the term static meaning that the image 120 does not substantially change over the course of the program.

Static images are just that, images that remain substantially static during the course of a program. This does not mean that a static image is purely static, for it may have animated elements; this simply means that a static image has at least one element that remains the same over a period of time. (The length of this period of time can be predetermined by a designer, and can also be equivalently defined as a number of frames.) For example, the static image can include text or a symbol that only changes according to some specific rule. In Fig.1 the channel logo 120 may be a completely static "A" or it may have any number of visual effects such as an occasional rotation or a twinkling effect. The main point is that the channel logo 120 contains a static element with respect to the main content of the television program, which is usually entirely dynamic.

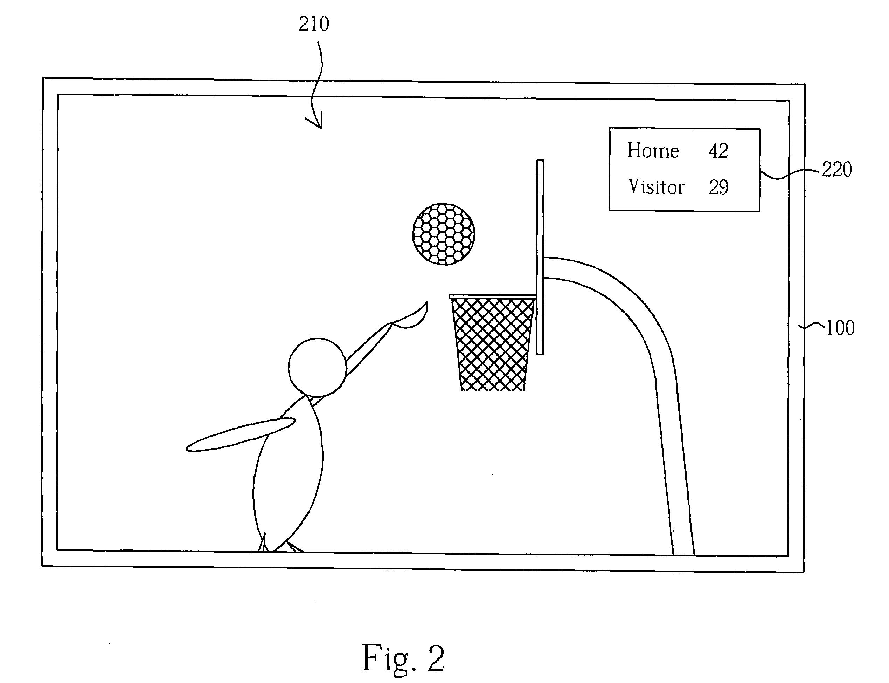

Referring to Fig. 2, another example of a static image is shown. The video display device 100 shows a basketball game 210 and a score display 220 (sometimes known as a score box or box score). The score display 220 is a static image, which may have some animation, that changes infrequently with respect to the basketball game 210. The numerals in the score display 220 change from time to time when the score changes. The score display 220 can also include a more general symbol, such as a marker indicating a position of a player.

It is important to note that the static images of Fig. 1 and Fig. 2, that is the channel logo 120 and the score display 220, are not usually present in non-program segments (i.e., commercial advertising spots).

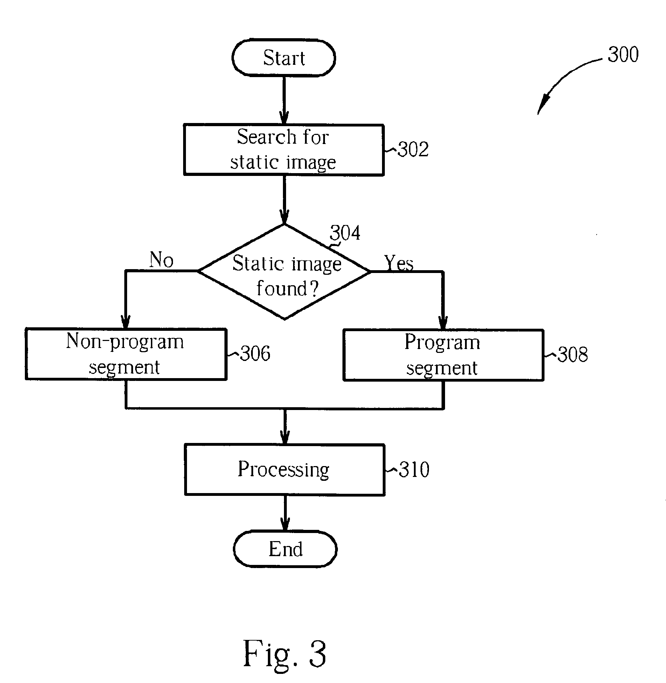

Please refer to Fig. 3, which details a method 300 for video program processing using static images according to the present invention. In step 302, a device, which may include software, hardware, firmware or a combination of such and which is discussed later, searches for a static image within the video program. In step 304, it is determined whether a specific/predetermined static image (e.g., channel logo or score display) has been found. When the specific/predetermined static image has not been found, step 306 identifies the segment under consideration as a non-program segment (i.e., a commercial). On the other hand, when the specific/predetermined static image has been found, step 308 identifies the segment under consideration as a program segment (i.e., part of a sports game or other program). Lastly, once the type of segment has been determined, the method 300 performs a step 310 of processing the segment considering the indication of step 306 or 308. This processing can include any number of things.

The searching step 302 can be performed for a segment of any number of frames and at any frequency of frames, as determined by a designer. The searching also need not be preprogrammed with static image information, and can be adapted to detect a generic static image (i.e., by arbitrarily comparing changes in elements of frames). In addition, when the static image includes a numeral (or symbol) of a score display, the searching step 302 can detect or monitor for a change in the numeral. That is, the searching step 302 can use the presence of numerals to identify the static image as a score display and improve the accuracy of non-program segment discrimination (i.e., a non-program segment would rarely, if ever, have a score display). In addition to this, specific search devices, algorithms, and techniques are well known to those in the art. Lastly, while there is inherent uncertainty in the searching step 302, the present invention aims to reduce this by the above techniques.

As mentioned, the processing of step 310 can include any known video processing. Such processing can be performed by a processor and can include detecting or removing advertising spots in a video program comprising the video segment and post-processing a video program comprising the video segment. When used with a device or piece of software that detects advertisements, the present invention can help better identify commercial spots, since such spots frequently lack a channel logo and essentially always lack something that could be considered a score display. When used with a device or piece of software that post-processes video programs (i.e., generates highlights, replays, trailers, etc), the present invention can help reduce the amount of processing required by identifying non-program segments that the processing step 310 can skip. This can reduce the amount of needless processing performed.

Regarding the method 300. The steps listed can be performed in other orders and can have other steps intervening. The steps need not be performed exactly as disclosed, as long as the same purpose is achieved.

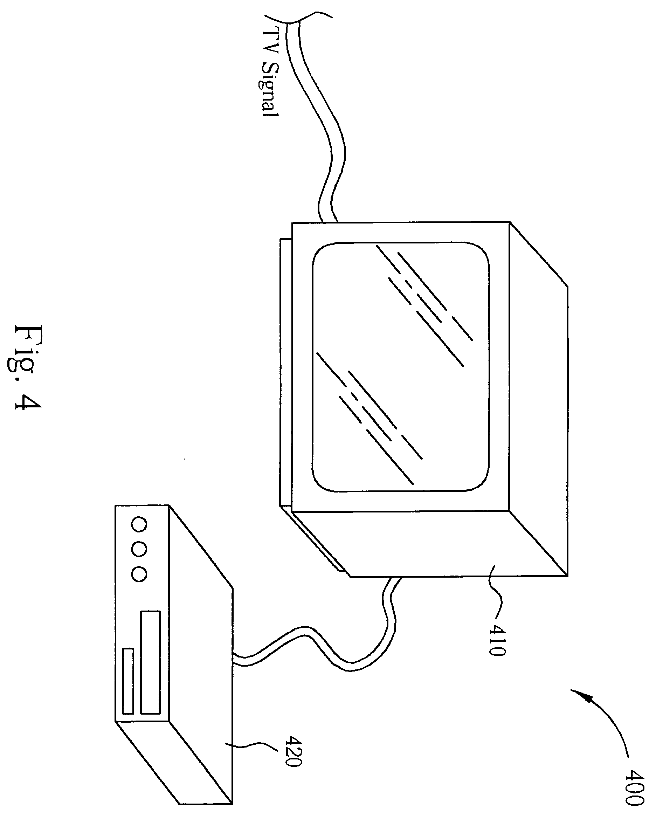

Fig. 4 illustrates a video program processing system 400 according to the present invention. The video program processing system 400 includes a television set 410 and a video device 420. The television set 410 is well known and could be replaced by a liquid crystal display (LCD) or plasma display panel (PDP). A TV signal is input to the television set 410. The video device 420 is a device that performs the method 300, and can be a specialized stand-alone device or a device such as an improved digital versatile disc (DVD) player or the like. The video device 420 obtains TV program data from the television set 410. Alternately, the video device 420 could be connected between the TV signal and the television set 410.

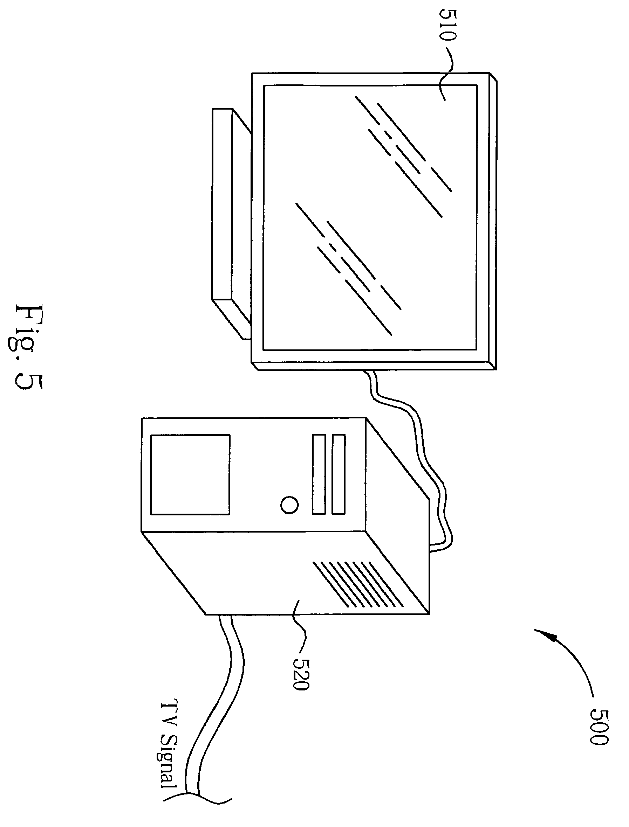

Fig. 5 illustrates another video program processing system 500 according to the present invention. The video program processing system 500 includes an LCD monitor 510 and a video device 520, that is, a computer. The LCD monitor 510 is well known and could be replaced by a cathode ray tube (CRC) device or a PDP. The computer 520 may obtain TV program data from an input TV signal that is received at a video card. The computer 520 has hardware, software and/or firmware that performs the method 300.

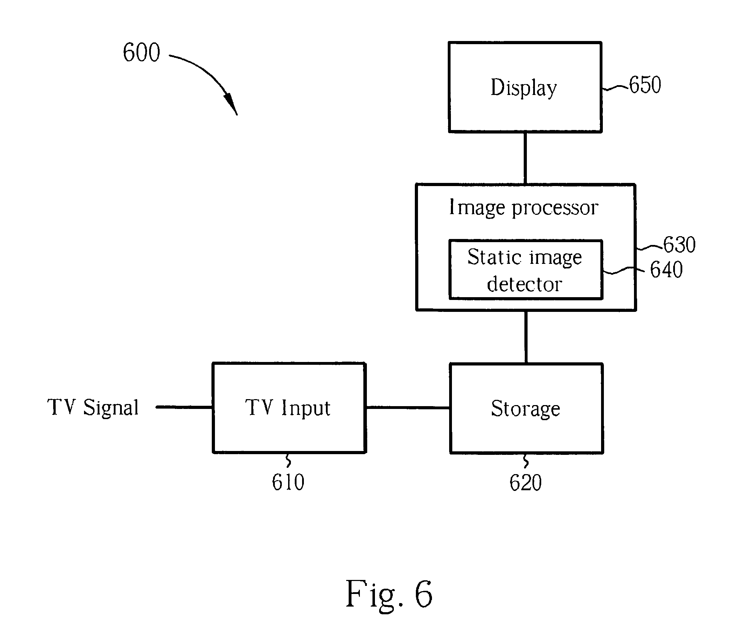

Please refer to Fig. 6, which shows a block diagram of a video program processing system 600 according to the present invention. The video program processing system 600 shows in detail components of the video program processing system 400 or 500. The video program processing system 600 includes a network broadcasting signal input 610 (or a TV input in other embodiments), a storage device 620, an image processor 630, and a display device 650. The image processor 630 includes a static image detector 640 that has programmed hardware, software, and/or firmware that performs steps 302-308 of the method 300. The image processor 630 can perform the above-mentioned image processing of step 310. The network broadcasting signal input 610 receives a network broadcasting signal. The storage device 620 records or buffers the network broadcasting signal. The connections shown are for illustrative purposes, and the elements may be rearranged depending on requirements. For example, the network broadcasting signal input 610 may be part of the display device 650.

In operation, the video program processing system 600 receives the network broadcasting signal at the network broadcasting signal input 610 and stores video data or segments in the storage device 620. Then, anytime from immediately after (real-time) to at a much later time (recording) that can be determined by a user, the image processor 630 accesses the storage device 620 to perform processing, such as post-processing (i.e., highlight or replay extraction), real-time commercial detection and removal, post-processing removal of commercials, or another kind of processing. During the processing, the static image detector 640 detects static images in segments of the video program and indicates to the image processor 630 whether these segments are program segments or non-program segments. According to such indications, the image processor 630 can better perform its processing.

In practical application, the present invention is well suited for sports programs. A home viewer watching the basketball game 210 (Fig. 2) on the TV set 410 (Fig. 4), in real-time or while playing back a recording, can use the video program device 420 and its ability to detect the score display 220 to skip commercial advertising spots for convenience and viewing pleasure. Meanwhile, the operator of a Web site that offers sports highlight videos for download can extract highlights of a golf game 110 (Fig. 1) via the computer 520 (Fig. 5), which detects the absence or presence of the channel logo "A" 120 to prevent needless image processing of commercial spots. Furthermore, the video program processing system 500 and the video program processing system 600 may be applied to receive and process any type of video signal that contains a sports program.

In other embodiments of the invention, and these depend on the specific program or TV channel, there may be both a channel logo and a score display in a program segment and either the channel logo or no static image at all in a non-program segment. There may also be only a score display in a program segment and only a channel logo in a non-program segment. Of course, other possibilities are also likely. The present invention is capable of handling all of these scenarios with designs referencing the above-described embodiments.

## Claims

1. A method for video program processing **characterised by**:
searching for a static image (120, 220) in a video segment, a static image (120, 220) comprising an image in the video segment that does not significantly change over a predetermined time of the video segment; and
upon finding a static image (120, 220), indicating to an image processor (630) that the video segment is a program segment.

2. The method of claim 1, **characterised in that** the static image (120) is a television channel logo.

3. The method of claim 1, **characterised in that** the static image (220) is a sports program score display.

4. The method of claim 3, **characterised in that** searching for the static image (220) in the video segment comprises searching for a symbol in the sports program score display.

5. The method of claim 4, **characterised in that** searching for the static image (220) in the video segment further comprises detecting a change of the symbol.

6. The method of claim 4 or 5, **characterised in that** the symbol is a numeral.

7. The method of claim 1, 2, 3, 4, 5, or 6, **characterised in that** the image processor (630) is for detecting advertising spots in a video program (110, 210) comprising the video segment, a segment other than a program segment being an advertising spot.

8. The method of claim 1, 2, 3, 4, 5, or 6, **characterised in that** the image processor (630) is for post-processing program segments of a video program (110, 210) comprising the video segment.

9. A video program processing system (600) comprising:
an input (610) for receiving a video program (110, 210) comprising video segments; and
an image processor (630) coupled to the input (610) and **characterized by**: a static image detector (640) for detecting static images (120, 220), a static image (120, 220) comprising an image in a video segment that does not significantly change over a predetermined time of the video segment, the static image detector (640) indicating to the image processor (630) a presence or absence of a static image (120, 220).

10. The video program processing system (600) of claim 9, **characterized in that** the static image detector (640) is programmed such that upon finding a static image (120, 220), the static image detector (640) indicates to the image processor (630) that the video segment is a program segment.

11. The video program processing system (600) of claim 9 or 10 further **characterized by** a storage device (620) coupled between the image processor (630) and the input (610).

12. The video program processing system (600) of claim 11, **characterized in that** the storage device (620) buffers video segments of the video program (110, 210).

13. The video program processing system (600) of claim 11, **characterized in that** the storage device (620) stores video segments of the video program (110, 210).

14. The video program processing system (600) of claim 9, 10, 11, 12, or 13 further **characterized by** a display device (650) coupled to the image processor (630) and for displaying output of the image processor (630).

15. The video program processing system (600) of claim 14, **characterized in that** the input (610) is part of the display device (650) and the display device (650) is a television set.

16. A computer-readable medium having computer-executable components, **characterised by**:
a component for searching for a static image (120, 220) in a video segment, a static image (120, 220) comprising an image in the video segment that does not significantly change over a predetermined time of the video segment; and
a component for, upon finding a static image (120, 220), indicating to an image processor (630) that the video segment is a program segment.

17. The computer-readable medium of claim 16, **characterised in that** the static image (120) is a television channel logo.

18. The computer-readable medium of claim 16, **characterised in that** the static image (220) is a sports program score display.

19. The computer-readable medium of claim 18, **characterised in that** the component for searching for a static image (220) in the video segment is for searching for a symbol in the sports program score display.

20. The computer-readable medium of claim 19, **characterised in that** the component for searching for a static image (220) in the video segment is further for detecting a change of the symbol.

21. The computer-readable medium of claim 19 or 20, **characterised in that** the symbol is a numeral.
